# EUROPEAN PATENT SPECIFICATION

(11) **EP 2 480 961 B1**
(45) Date of publication and mention of the grant of the patent: **19.02.2020**
(21) Application number: 10819007.5
(22) Date of filing: 16.09.2010
(51) Int. Cl.: G06F 3/0488, G06F 21/36

(54) **METHOD OF PROVIDING A USER INTERFACE OF A MOBILE TERMINAL EQUIPPED WITH A TOUCH SCREEN AND MOBILE TERMINAL THEREFOR**
VERFAHREN ZUR BEREITSTELLUNG EINER BENUTZEROBERFLÄCHE FÜR EIN MOBILES ENDGERÄT MIT EINEM TOUCHSCREEN UND MOBILES ENDGERÄT DAFÜR
PROCÉDÉ POUR FOURNIR UNE INTERFACE UTILISATEUR D'UN TERMINAL MOBILE ÉQUIPÉ D'UN ÉCRAN TACTILE ET TERMINAL MOBILE CORRESPONDANT

(30) Priority: 22.09.2009 KR 20090089493
(43) Date of publication of application: 01.08.2012
(73) Proprietor: Samsung Electronics Co., Ltd., Suwon-si, Gyeonggi-do, 443-742 (KR)
(72) Inventor: WATANABE, Masato, Tokyo (JP); LEE, Jong Seong, Tokyo (JP)
(74) Representative: HGF Limited
(86) International application number: PCT/KR2010/006356
(87) International publication number: WO 2011/037366

(56) References cited:
- WO-A2-2009/004435
- KR-A- 20080 079 333
- KR-A- 20090 012 836
- KR-A- 20100 089 376
- US-A1- 2008 122 796
- US-A1- 2009 006 991
- US-A1- 2009 160 778

## Description

### [Technical Field]

The present invention relates to a method and apparatus for providing an interface for a mobile terminal. More particularly, the present invention relates to a method and apparatus for providing an interface for unlocking a locked state or a state similar to a locked state.

### [Background Art]

Generally, a portable terminal is an electronic device that enables a user to freely use functions such as wireless communications, accessing networks digital broadcast reception, documentation, and game while not being restricted by a time or a place. The portable terminal includes a display unit displaying the state of portable terminal to the user for more convenient use. The information displayed on the display unit can include information about privacy or secrete information which requires protection, so that a lock function is provided for the protection of privacy for secret information. Moreover, a lock function is provided so as to prevent terminal from being operated due to an unintentional touch input. However, in the state that user is unable to anticipate what kind of information is displayed on the display unit when it is unlocked, or in the state that it is expected that the information about privacy or the secret information is not displayed on the display unit, when an unlock signal is input to unlock, there can be a danger that information about privacy or secret information can be exposed to neighboring persons as the secret information is displayed.

US2009/0006991A1 discloses a method for unlocking a touch screen device from an idle mode.

US2008/0122796 discloses a method having the features of the pre-characterizing portion of claim 1 and an apparatus having the features of the pre-characterizing portion of claim 13.

### [Disclosure of Invention]

### [Technical Problem]

The present invention provides a method and apparatus for providing an interface for protecting the privacy of user of a mobile terminal.

The present invention further provides a method and apparatus for providing an interface for a mobile terminal that virtually enables to directly manipulate the screen.

### [Solution to Problem]

One exemplary aspect of the present invention provides a method of providing an interface for a terminal equipped with a touch screen, the method being as defined by claim 1.

Another exemplary aspect of the present invention provides a terminal as defined by claim 13.

According to an exemplary embodiment of the present invention, the privacy of user can be more effectively protected than known heretofore. Moreover, according to an exemplary embodiment of the present invention, an interface can be provided to user by an interface which virtually enables direct manipulation of a screen.

### [Advantageous Effects of Invention]

The present invention provides a method and apparatus for providing an interface for protecting the privacy of user of a mobile terminal.

The present invention further provides a method and apparatus for providing an interface for a mobile terminal that virtually enables to directly manipulate the screen.

### [Brief Description of Drawings]

The exemplary objects, features and advantages of the present invention will become more apparent from the following detailed description in conjunction with the accompanying drawings, in which:
FIG. 1 is a block diagram illustrating a configuration of a terminal for providing an interface according to an exemplary embodiment of the present invention;
FIG. 2 is a flowchart illustrating an exemplary operation of a process of providing an interface according to an exemplary embodiment of the present invention;
FIG. 3 is a diagram illustrating a process of providing an interface according to a first exemplary embodiment of the present invention;
FIG. 4 is a diagram illustrating a process of providing an interface according to a second exemplary embodiment of the present invention;
FIG. 5 is a diagram illustrating a process of providing an interface according to a second exemplary embodiment of the present invention; and
FIGS. 6 and 7 are diagrams illustrating a process of providing an interface according to a third exemplary embodiment of the present invention.

### Mode for the Invention

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring appreciation of the subject matter of the present invention by a person of ordinary skill in the art.

Hereinafter, the present invention is illustrated with reference to drawings for illustrating a portable terminal according to exemplary embodiments of the present invention.

Herein, a first screen typically refers to a screen covering a second screen. User can approach the second screen at last after skinning the first screen. The first screen is provided so as to protect the privacy of the user or stir interest to the user. In this document, the second screen refers to a screen required for actual use of the terminal. The second screen includes both a screen required for the function of the conventional terminal and a screen required for the function of the terminal which is to be developed and added.

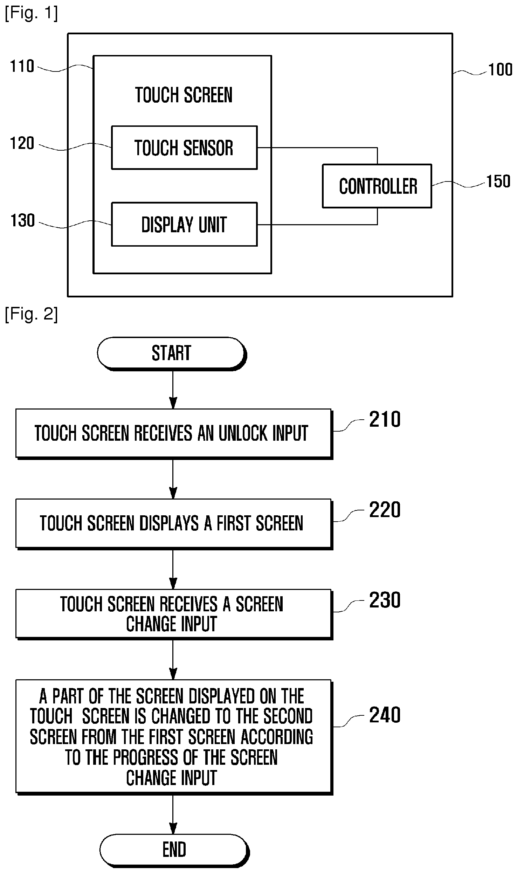

FIG. 1 is a block diagram illustrating a configuration of a terminal for providing an interface 100 according to an exemplary embodiment of the present invention.

Referring now to FIG. 1, the terminal for providing an interface 100 according to an exemplary embodiment of the present invention preferably includes a touch screen 110 and a controller 150. In this example, the touch screen 110 includes a touch sensor 120 and a display unit 130. The touch screen 110 refers to a device that inputs a command or data with a finger or the like by contacting an item displayed on a display screen. The touch screen 110 includes the display unit 130 displaying a screen and a touch panel or touch sensor 120 which senses an input of user and converts into an electrical signal. The display unit 130 can output a screen data which is generated when performing the function of the terminal for providing an interface 100, and status information according to the key manipulation and function setting of the user. Moreover, the display unit 130 can visually display different signals and color information output from the controller 150. Such a display unit 130 can be formed of, for example, a liquid crystal display (LCD) or an organic light-emitting diode (OLED). However, virtually any thin film display can be used with the present invention. The touch sensor 120 can perform the input unit function of receiving an input from the user. The touch sensor 120 can be mounted for folding on the display unit 130, and senses touch by detecting the change of physical quantity generated due to the surface touch of touch sensor 120 by user, and convert the change of physical quantity due to touch into a touch signal and send it to the controller 150. The principle of operation of touch sensor 120 includes a load press method, a fine metal line reclamation method (decompression method), a resistive method, an electrostatic capacitive method, a supersonic wave reflection method, an optical sensor and an electromagnetic induction method. Since the principle of operation of above-described touch sensor 120 is understood by a person skilled in the art of the present invention, the detailed description is omitted from the present disclosure. Particularly, the touch sensor 120 according to an exemplary embodiment of the present invention receives an unlock input and a screen change input. The unlock input is an input that unlocks a locked state of the mobile terminal and the screen change input is an input for converting a first screen which is displayed after the unlock input into a second screen in order to actually use the terminal.

Referring now to FIGS. 2 to 7, the unlock input, the screen change input, the first screen and the second screen are illustrated hereafter in more detail.

The touch sensor 120 can receive the unlock input and the screen change input from a user to convert the touches into a signal and send it to the controller 150. Moreover, the display unit 130 according to an exemplary embodiment of the present invention displays a screen under the control of the controller 150. The controller 150 controls the display unit 130 to display a preset first screen when the touch sensor 120 receives an unlock input, controls the display unit 130 to convert a part of the screen displayed on the display unit 130 according to the progress of the screen change input through the touch sensor 120 into a second screen from the first screen.

The detailed operation of the touch screen 110 and the controller 150 is described in detail later with reference to FIGS. 2 to 7.

FIG. 2 is a flowchart illustrating a process of providing an interface according to an exemplary embodiment of the present invention.

Referring now to FIG. 2, at step (210) in a locked state (or an idle state), the touch screen 110 receives an unlock input.

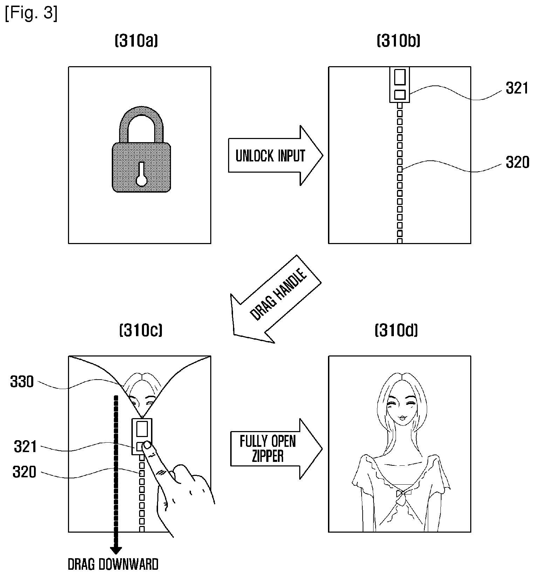

FIG. 3 is a diagram illustrating a process of providing an interface according to a first exemplary embodiment of the present invention.

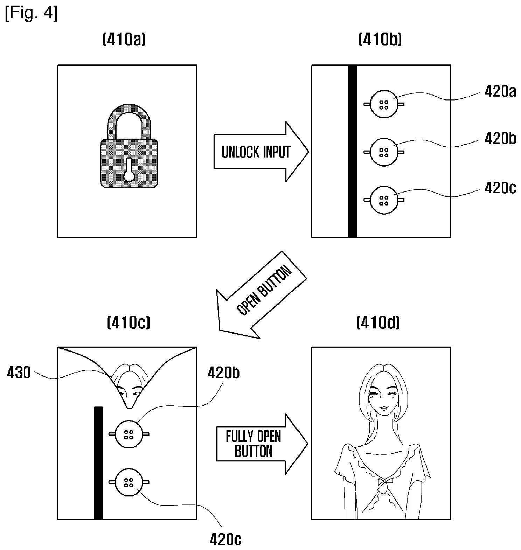

The first drawing 310a of FIG. 3 shows a screen in the locked state. The screen in the locked state can display, for example, a drawing in which a padlock is expressed like the first drawing 310a of FIG. 3, or can display a black screen like the screen of the idle state in which no drawings are expressed. In case of an unlock input, i.e., an idle cancel input is input even in the case of an idle state, i.e., even in the state that nothing is displayed on the screen as nothing is input for a given time, the process like FIGS. 2 and 3 can be performed. The unlock input can include an idle cancel input. In the lock state of the first drawing 310a of FIG. 3, the touch sensor 120 included in the touch screen 110 receives an unlock input. The unlock input can be one or more of various inputs according to the setting of user such as a password input or a simple touch input. In FIG. 2, at step (220) the touch screen 110 which received the "unlock" input displays a preset first screen. The second drawing 310b of FIG. 3 is an example of the preset first screen. In the second drawing 310b of FIG. 3, a zipper 320 is shown. Another example of the preset first screen is presented in FIGS. 4 to 7. The first screen is a screen which covers the second screen by the zipper 320, the button or the like instead of displaying the second screen like a fourth drawing 310d of FIG. 3. After the process of skinning the first screen, user can finally approach the second screen, i.e., the screen necessary for actually using a terminal. Private information or secret information of the user can be displayed on the second screen, but a preset screen that captures the interest of user such as a simple zipper, and a button or the like, is displayed on the first screen. The touch sensor 120 senses the unlock input to convert it into a signal and sends to the controller 150. The controller 150 received the signal controls the display unit 130 to display the first screen.

Referring again to FIG. 2, the touch screen 110 displaying the first screen receives a screen change input. The screen change input is an input for changing the first screen into the second screen. When the screen change input is sufficient, all of the first screen is changed to the second screen, whereas a part of the screen is changed when only a part of screen change input is inputted. For example, when user drags a handle 321 of the zipper 320 such that the center of the handle 321 of the zipper 320 reaches the distance within 20 pixels (preset distance) from the downside of screen, the screen change input can be considered sufficient and the first screen can be changed into the second screen. On the other hand, when the center of the handle 321 of the zipper 320 is positioned in the distance further than 20 pixels (preset distance) from the downside of screen, accordingly, only a part of screen is changed from the first screen to the second screen. However, this partial change may cause the user to desire to see the whole second image, and thus move the zipper image the rest of the way,

In FIG. 3, the screen change input may comprise an input that downwardly drags the vicinity of the handle 321 of the zipper 320 by a user. At step (240) part of the screen displayed on the touch screen is changed to the second screen from the first screen according to the progress of the screen change input. hat is, if user inputs the screen change input that downwardly drags the vicinity of the handle 321 of the zipper 320 like the third screen 310c of FIG. 3, accordingly, a part of the zipper 320 is opened and the screen 330 of the open part of the zipper 320 is changed into the second screen. The other part, i.e., the part that the zipper 320 is not opened is still covered. If the handle 321 of the zipper 320 is sufficiently dragged downwardly, the zipper 320 is considered to be fully opened and the entire screen is changed into the second screen like the fourth screen 310d of FIG. 3. After the entire screen is changed into the second screen, user can see private information or other secret information as if the screen of the mobile terminal is an unlocked state as in the related art.

FIG. 4 is a diagram illustrating a process of providing an interface according to a second embodiment of the present invention.

Referring now to FIG. 2, in the locked state or the idle state, at step (210) the touch screen 110 receives an unlock input. A first drawing 410a of FIG. 4 shows a screen of the lock state. In the lock state of the first drawing 410a of FIG. 4, the touch sensor 120 included in the touch screen 110 receives the unlock input.

In FIG. 2, at step (220) the touch screen 110 received unlock input displays a preset first screen. A second drawing 410b of FIG. 4 is an example of preset first screen. In a second drawing 410b of FIG. 4, a plurality of buttons 420a, 420b, 420c are displayed. The first screen is a screen which covers private information by the zipper or the button 420 instead of displaying private information like a fourth drawing 410d of FIG. 4. The user can approach the second screen, i.e., a screen displaying the private information after the process of skinning the first screen. The touch sensor 120 senses the unlock input to convert into a signal and sends it to the controller 150. The controller 150 receiving this signal controls the display unit 130 to display the first screen. At step (230), the touch screen 110 displaying the first screen receives a screen change input.

In FIG. 4, the screen change input can be an input that user touches buttons 420a, 420b, 420c. At step (240), a part of the screen displayed on the touch screen according to the progress of the screen change input is changed from the first screen to a second screen. In other words, if the user inputs the screen change input that touches the first button 420a like the third screen 410c of FIG. 4, the touched first button 420a is opened. The screen 430 of the open part is changed into the second screen as the first button 420a is opened. The other part, i.e., a part in which the button 420 is not opened is still covered. If all the buttons 420a, 420b, 420c are touched and opened, the entire screen is changed into the second screen as shown in the fourth screen 410d of FIG. 4. After the entire screen changes into the second screen, the user can see private information or other secret information as if it is an unlock state of the related art.

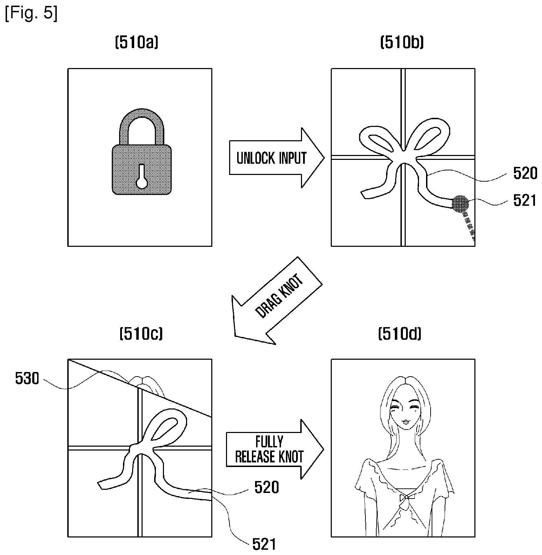

FIG. 5 is a diagram illustrating a process of providing an interface according to a second exemplary embodiment of the present invention

Referring now to FIG. 2, at step (210) in the lock state or the idle state, the touch screen 110 receives an unlock input. A first drawing 510a of FIG. 5 shows a screen of the lock state. In the lock state of the first drawing 510a of FIG. 5, the touch sensor 120 included in the touch screen 110 receives the unlock input. In FIG. 2, at step (220), the touch screen 110 received unlock input displays a preset first screen.

A second drawing 510b of FIG. 5 is another example of preset first screen. In the second drawing 510b of FIG. 5, a knot 520 is displayed.

The first screen 510a is a screen which covers private information by the knot 520 instead of displaying private information, such as in the fourth drawing 510d of FIG. 5. A user can begin to view a second screen, i.e., a screen displaying the private information after the process of skinning the first screen. The touch sensor 120 senses the unlock input to convert it into a signal and sends it to the controller 150. The controller 150 receiving this signal controls the display unit 130 to display the first screen. Then, at step (230), the touch screen 110 displaying the first screen receives a screen change input.

In FIG. 5, the screen change input can be an input in which a user drags an end 521 of the knot 520, so as to in a two-dimensional sense "untie" the knot. At step (240), a part of the screen displayed on the touch screen according to the progress of the screen change input is changed from the first screen to the second screen. In other words, if user inputs the screen change input that drags the end 521 of the knot 520 like the third screen 510c of FIG. 5, then, the knot 520 is released (i.e. untied). The screen 530 of the open part is changed into the second screen as the knot 520 is being released. The other part, i.e., a part in which the knot 520 is not released, is still covered. If the knot 520 is completely released, the entire screen is changed into the second screen, such as shown in the screen display 510d of FIG. 5. After the entire screen is changed into the second screen, the user can view private information or other secret information displayed on the screen as if the device display is an unlocked state.

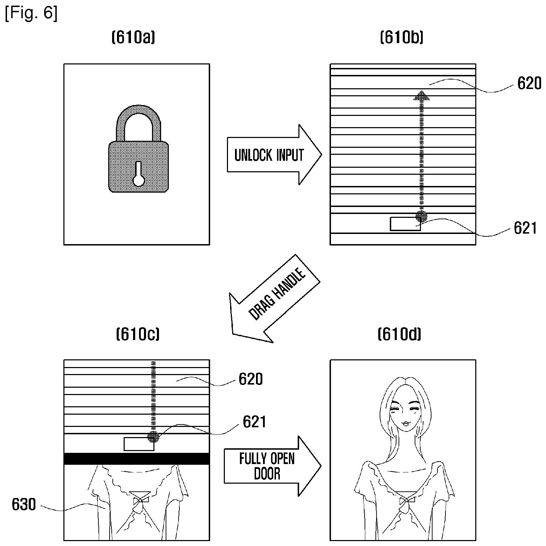

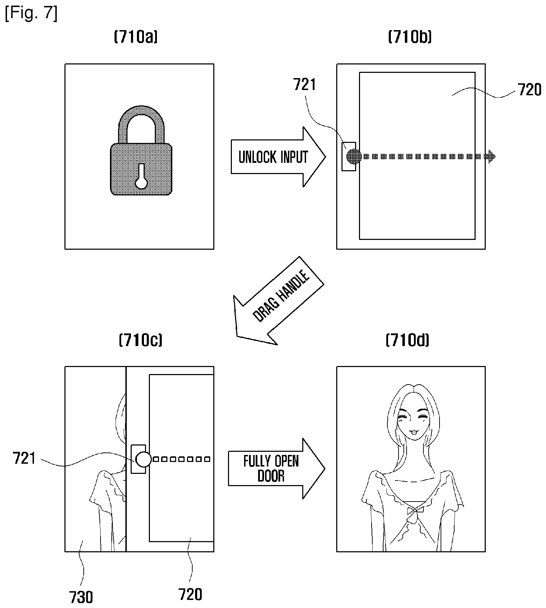

FIGS. 6 and 7 are diagrams illustrating a process of providing an interface according to a third exemplary embodiment of the present invention.

Referring now to FIG. 2, in the locked state or the idle state, at step (210) the touch screen 110 receives an unlock input. A first drawing 610a of FIG. 6 shows a screen of the locked state. In the locked state such as the first drawing 610a of FIG. 6, the touch sensor 120 included in the touch screen 110 receives the unlock input. In FIG. 2, the touch screen 110 received unlock input displays a preset first screen (220). A second drawing 610b of FIG. 6 is an example of preset first screen. In the second drawing 610b, a door 620 which is upwardly opened and downwardly closed is displayed.

A first screen comprises a screen which covers private information by the door 620 which is upwardly opened and downwardly closed instead of displaying private information like drawing 610d of FIG. 6. A User can approach a second screen, i.e., a screen displaying the private information after the process of skinning the first screen. The touch sensor 120 senses the unlock input to convert it into a signal and sends it to the controller 150. The controller 150 receiving this signal controls the display unit 130 to display the first screen. At step (230), the touch screen 110 displaying the first screen receives a screen change input.

In FIG. 6, the screen change input may comprise an input that a user drags in the vicinity of a handle 621 of the door 620. At step (240), a part of the screen displayed on the touch screen according to the progress of the screen change input is changed from the first screen to the second screen. That is, if the user inputs the screen change input in which the user drags in the vicinity of a handle 621 of the door 620 like a screen display 610c of FIG. 6, the door 620 is then opened. Next, the screen 630 of the open part is changed display wise into displaying the second screen as the door 620 is opened. The other part, i.e., a part in which the door 620 is not opened is still covered. If the vicinity of a handle 621 of the door 620 is fully dragged upward, the door 620 is considered fully opened, so that the entire screen is changed into the second screen like the display screen 610d of FIG. 6. After the entire screen is changed into the second screen, a user can see private information or other secret information as if the device is an unlocked state.

An exemplary embodiment shown in FIG. 7 is similar to that of FIG. 6. However, there is a difference in that a door 720 which is opened and closed from side to side is displayed instead of the door 620 which is opened upward and closed downward, and a handle 721 of door 720 is dragged from side to side. In addition, a first display screen 710a, a second display screen 710b, a third display screen 710c, a fourth display screen 710d and a screen 730 having an open part are identical with those of FIG. 6 or substantially correspond to those of FIG. 6.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

### Industrial Applicability

Although exemplary embodiments of the present invention have been described in detail hereinabove, a person of ordinary skill in the art should clearly understand that many variations and modifications of the basic inventive concepts herein taught which may appear to those skilled in the present art will still fall within the scope of the present invention, as defined in the appended claims.

## Claims

1. A method of providing an interface for a terminal (100) equipped with a touch screen (110), comprising:
displaying an idle state screen (310a) when the terminal is in an idle state;
displaying a first screen (310b), instead of the idle state screen, in response to receiving an idle cancel input, the first screen initially covering a second screen (310d) such that the second screen is initially not visible; and
receiving a user input for uncovering at least a part of the second screen on the touch screen displaying the first screen,
and **characterized in that** the method further comprises:
progressively uncovering the second screen such that information on the second screen can be viewed by changing a part of a screen displayed on the touch screen from the first screen into the second screen according to a progress of the user input.

2. The method in accordance with claim 1, wherein the idle state screen (310a) is one of: a screen displaying nothing; and a black screen.

3. The method in accordance with claim 1 or claim 2, further comprising, when progress of the user input is sufficient, uncovering all of the second screen (310d).

4. The method in accordance with claim 3, wherein the user input comprises a touch and drag, and progress of the user input is sufficient when a touch point reaches a preset distance from a side of the touch screen.

5. The method in accordance with any one of claims 1 to 3, wherein the user input comprises a touch and drag.

6. The method in accordance with claim 5, wherein said drag is a drag towards one of a side edge, a top edge, and a bottom edge of the touch screen (110).

7. The method in accordance with any preceding claim, wherein the second screen (310d) is a screen required for a function of the terminal.

8. The method of claim 1, wherein the received user input is a predetermined movement along a specific part of the touch screen (110) that changes screen allocation so that a size of the part of the screen displayed as the first screen is reduced as a part of the touch screen displayed as the second screen is increased in correspondence with a distance of a predetermined movement along the specific part of the touch screen.

9. The method of claim 1, wherein the first screen (310b) comprises a screen displaying a zipper (320), and the user input comprises a touch input in which a predetermined movement drags a handle (321) of the zipper displayed on the first screen to open the zipper, wherein progressively uncovering the second screen comprises changing a part of the screen where the zipper is opened from the first screen into the second screen as the handle of the zipper is dragged.

10. The method of claim 1, wherein the first screen comprises a screen displaying a plurality of buttons (420a, 420b, 420c), and wherein the user input comprises a touch input which touches the plurality of buttons displayed on the first screen to open the plurality of buttons, wherein progressively uncovering the second screen comprises changing a part of the screen where the buttons are opened from the first screen into the second screen as the plurality of buttons are opened.

11. The method of claim 1, wherein the first screen comprises a screen displaying a knot (520), wherein the user input comprises a touch input which drags a part of the knot displayed on the first screen to release the knot, wherein progressively uncovering the second screen comprises changing a part of the screen displayed on the touch screen from the first screen into the second screen according to a ratio in which the knot is released.

12. The method of claim 1, wherein the first screen comprises a screen displaying a door (620), wherein the user input comprises a touch input which drags a handle of the door displayed on the first screen to open the door, wherein progressively uncovering the second screen comprises changing a part of the screen where the door is opened from the first screen into the second screen as the handle of the door is dragged.

13. A terminal (100) for providing an interface, comprising:
a touch screen (110) comprising a touch sensor (120) which is configured to receive an idle cancel input for displaying a first screen, and a user input for uncovering at least a part of a second screen covered by the first screen, and a display unit (130) which is configured to display a screen under the control of a controller; and the controller (150) controlling the display unit to display an idle state screen (310a) when the terminal is in an idle state and to display the first screen (310b) instead of the idle state screen when the touch sensor senses the idle cancel input, the first screen initially covering the second screen (310d) such that the second screen is initially not visible, and **characterized in that** the controller is further arranged to control the display unit to progressively uncover the second screen such that information on the second screen can be viewed by changing a part of a screen displayed on the display unit from the first screen into the second screen according to a progress of the user input sensed by the touch sensor.

14. The terminal of claim 13, wherein the first screen comprises a screen displaying a zipper, and wherein the user input comprises a touch input command which drags a handle of the zipper displayed on the first screen to open the zipper, and the controller controls the display unit to change a part of the screen where the zipper is opened from the first screen into the second screen as the handle of the zipper is dragged.

15. The terminal of claim 13, wherein the first screen is a screen displaying a plurality of buttons, the user input is a touch input which touches the plurality of buttons displayed on the first screen to open the plurality of buttons, and the controller controls the display unit to change a part of the screen where the buttons are opened from the first screen into the second screen as the plurality of buttons are opened.

16. The terminal of claim 13, wherein the first screen is a screen displaying a knot, the user input is a touch input which drags a part of the knot displayed on the first screen to release the knot, and the controller controls the display unit to change a part of the screen displayed on the touch screen from the first screen into the second screen according to a ratio in which the knot is released.

17. The terminal of claim 13, wherein the first screen comprises a screen displaying a door, the user input is a touch input which drags a handle of the door displayed on the first screen to open the door, and the controller controls the display unit to change a part of the screen where the door is opened from the first screen into the second screen as the handle of the door is dragged.

18. The terminal of claim 13, wherein the received user input is a predetermined movement along a specific part of the touch screen that changes screen allocation so that a size of the part of the screen displayed as the first screen is reduced as a part of the touch screen displayed as the second screen is increased in correspondence with a distance of a predetermined movement along the specific part of the touch screen.

19. The terminal in accordance with any one of claims 13 to 18, wherein the idle state screen (310a) is one of: a screen displaying nothing; and a black screen.

## Patentansprüche

1. Verfahren zum Bereitstellen einer Schnittstelle für ein mit einem Berührungsbildschirm (110) ausgestattetes Endgerät (100), umfassend:
Anzeigen eines Inaktivitätszustand-Bildschirms (310a), wenn sich das Endgerät in einem Inaktivitätszustand befindet; Anzeigen eines ersten Bildschirms (310b) anstelle des Inaktivitätszustand-Bildschirms als Reaktion auf ein Empfangen einer Inaktivitätsabbruch-Eingabe, wobei der erste Bildschirm anfangs einen zweiten Bildschirm (310d) abdeckt, sodass der zweite Bildschirm anfangs nicht zu sehen ist; und
Empfangen einer Benutzereingabe zum Sichtbarmachen mindestens eines Teils des zweiten Bildschirms auf dem Berührungsbildschirm, der den ersten Bildschirm anzeigt, und **dadurch gekennzeichnet, dass** das Verfahren ferner umfasst:
progressives Sichtbarmachen des zweiten Bildschirms, sodass Informationen auf dem zweiten Bildschirm angesehen werden können, indem ein Teil eines Bildschirms, der auf dem Berührungsbildschirm angezeigt wird, entsprechend einem Fortschritt der Benutzereingabe von dem ersten Bildschirm in den zweiten Bildschirm gewechselt wird.

2. Verfahren nach Anspruch 1, wobei der Inaktivitätszustand-Bildschirm (310a) einer von Folgenden ist: ein Bildschirm, der nichts anzeigt; und ein schwarzer Bildschirm.

3. Verfahren nach Anspruch 1 oder Anspruch 2, ferner umfassend, wenn der Fortschritt der Benutzereingabe ausreichend ist, ein Sichtbarmachen des gesamten zweiten Bildschirms (310d).

4. Verfahren nach Anspruch 3, wobei die Benutzereingabe ein Berühren und Ziehen umfasst und ein Fortschritt der Benutzereingabe ausreichend ist, wenn ein Berührungspunkt einen vorgegebenen Abstand von einer Seite des Berührungsbildschirms erreicht.

5. Verfahren nach einem der Ansprüche 1 bis 3, wobei die Benutzereingabe ein Berühren und Ziehen umfasst.

6. Verfahren nach Anspruch 5, wobei das Ziehen ein Ziehen zu einem seitlichen Rand, einem oberen Rand und einem unteren Rand des Berührungsbildschirms (110) ist.

7. Verfahren nach einem vorherigen Anspruch, wobei der zweite Bildschirm (310d) ein Bildschirm ist, der für eine Funktion des Endgeräts erforderlich ist.

8. Verfahren nach Anspruch 1, wobei die empfangene Benutzereingabe eine vorbestimmte Bewegung entlang eines spezifischen Teils des Berührungsbildschirms (110) ist, die eine Bildschirmzuordnung ändert, sodass eine Größe des Teils des Bildschirms, der als erster Bildschirm angezeigt wird, verringert wird, wenn ein Teil des Berührungsbildschirms, der als zweiter Bildschirm angezeigt wird, entsprechend eines Abstands einer vorbestimmten Bewegung entlang des spezifischen Teils des Berührungsbildschirms vergrößert wird.

9. Verfahren nach Anspruch 1, wobei der erste Bildschirm (310b) einen Bildschirm umfasst, der einen Reißverschluss (320) anzeigt, und die Benutzereingabe eine Berührungseingabe umfasst, bei der eine vorbestimmte Bewegung einen Griff (321) des Reißverschlusses, der auf dem ersten Bildschirm angezeigt wird, zieht, um den Reißverschluss zu öffnen, wobei ein allmähliches Sichtbarmachen des zweiten Bildschirms ein Ändern eines Teils des Bildschirms, an dem der Reißverschluss geöffnet wird, von dem ersten Bildschirm in den zweiten Bildschirm umfasst, wenn der Griff des Reißverschlusses gezogen wird.

10. Verfahren nach Anspruch 1, wobei der erste Bildschirm einen Bildschirm umfasst, der eine Vielzahl von Schaltflächen (420a, 420b, 420c) anzeigt, und wobei die Benutzereingabe eine Berührungseingabe umfasst, die die Vielzahl von Schaltflächen berührt, die auf dem ersten Bildschirm angezeigt werden, um die Vielzahl von Schaltflächen zu öffnen, wobei ein allmähliches Sichtbarmachen des zweiten Bildschirms ein Ändern eines Teils des Bildschirms, auf dem die Schaltflächen geöffnet werden, von dem ersten Bildschirm in den zweiten Bildschirm umfasst, wenn die Vielzahl von Schaltflächen geöffnet wird.

11. Verfahren nach Anspruch 1, wobei der erste Bildschirm einen Bildschirm umfasst, der einen Knoten (520) anzeigt, wobei die Benutzereingabe eine Berührungseingabe umfasst, die einen Teil des auf dem ersten Bildschirm angezeigten Knotens zieht, um den Knoten zu lösen, wobei ein allmähliches Sichtbarmachen des zweiten Bildschirms ein Ändern eines Teils des Bildschirms, der auf dem Berührungsbildschirm angezeigt wird, von dem ersten Bildschirm in den zweiten Bildschirm gemäß einem Verhältnis umfasst, mit dem der Knoten gelöst wird.

12. Verfahren nach Anspruch 1, wobei der erste Bildschirm einen Bildschirm umfasst, der eine Tür (620) anzeigt, wobei die Benutzereingabe eine Berührungseingabe umfasst, die einen Griff der auf dem ersten Bildschirm angezeigten Tür zieht, um die Tür zu öffnen, wobei ein allmähliches Sichtbarmachen des zweiten Bildschirms ein Ändern eines Teils des Bildschirms, wo die Tür geöffnet wird, von dem ersten Bildschirm in den zweiten Bildschirm umfasst, wenn der Griff der Tür gezogen wird.

13. Endgerät (100) zum Bereitstellen einer Schnittstelle, umfassend:
einen Berührungsbildschirm (110) umfassend einen Berührungssensor (120), der konfiguriert ist, um eine Inaktivitätsabbruch-Eingabe zum Anzeigen eines ersten Bildschirms und eine Benutzereingabe zum Sichtbarmachen mindestens eines Teils eines zweiten Bildschirms, der von dem ersten Bildschirm abgedeckt wird, zu empfangen, und eine Anzeigeeinheit (130), die konfiguriert ist, um einen Bildschirm unter der Kontrolle einer Steuerung anzuzeigen;
und wobei die Steuerung (150) die Anzeigeeinheit steuert, um einen Inaktivitätszustand-Bildschirm (310a) anzuzeigen, wenn das Endgerät in einem Inaktivitätszustand ist, und um den ersten Bildschirm (310b) anstelle des Inaktivitätszustand-Bildschirms anzuzeigen, wenn der Berührungssensor die Inaktivitätsabbruch-Eingabe erfasst, wobei der erste Bildschirm anfangs den zweiten Bildschirm (310d) abdeckt, sodass der zweite Bildschirm anfangs nicht zu sehen ist, und **dadurch gekennzeichnet, dass** die Steuerung ferner angeordnet ist, um die Anzeigeeinheit zu steuern, um den zweiten Bildschirm progressiv sichtbar zu machen, sodass Informationen auf dem zweiten Bildschirm durch Ändern eines Teils eines Bildschirms, der auf der Anzeigeeinheit angezeigt wird, von dem ersten Bildschirm in den zweiten Bildschirm gemäß einem Fortschritt der durch den Berührungssensor erfassten Benutzereingabe angesehen werden können.

14. Endgerät nach Anspruch 13, wobei der erste Bildschirm einen Bildschirm umfasst, der einen Reißverschluss anzeigt, und wobei die Benutzereingabe einen Berührungseingabebefehl umfasst, der einen Griff des Reißverschlusses zieht, der auf dem ersten Bildschirm angezeigt wird, um den Reißverschluss zu öffnen, und die Steuereinheit die Anzeigeeinheit steuert, um einen Teil des Bildschirms, wo der Reißverschluss geöffnet wird, von dem ersten Bildschirm in den zweiten Bildschirm zu ändern, wenn der Griff des Reißverschlusses gezogen wird.

15. Endgerät nach Anspruch 13, wobei der erste Bildschirm ein Bildschirm ist, der eine Vielzahl von Schaltflächen anzeigt, die Benutzereingabe eine Berührungseingabe ist, die die Vielzahl der Schaltflächen berührt, die auf dem ersten Bildschirm angezeigt werden, um die Vielzahl der Schaltflächen zu öffnen, und die Steuerung die Anzeigeeinheit steuert, um einen Teil des Bildschirms, wo die Schaltflächen geöffnet werden, von dem ersten Bildschirm in den zweiten Bildschirm zu ändern, wenn die Vielzahl der Schaltflächen geöffnet wird.

16. Endgerät nach Anspruch 13, wobei der erste Bildschirm ein Bildschirm ist, der einen Knoten anzeigt, die Benutzereingabe eine Berührungseingabe ist, die einen Teil des Knotens zieht, der auf dem ersten Bildschirm angezeigt wird, um den Knoten zu lösen, und die Steuerung die Anzeigeeinheit steuert, um einen Teil des Bildschirms, der auf dem Berührungsbildschirm angezeigt wird von dem ersten Bildschirm in den zweiten Bildschirm gemäß einem Verhältnis zu ändern, mit dem der Knoten gelöst wird.

17. Endgerät nach Anspruch 13, wobei der erste Bildschirm einen Bildschirm umfasst, der eine Tür anzeigt, die Benutzereingabe eine Berührungseingabe ist, die einen Griff der Tür zieht, die auf dem ersten Bildschirm angezeigt wird, um die Tür zu öffnen, und die Steuereinheit die Anzeigeeinheit steuert, um einen Teil des Bildschirms, wo die Tür geöffnet wird, von dem ersten Bildschirm in den zweiten Bildschirm zu ändern, wenn der Griff der Tür gezogen wird.

18. Endgerät nach Anspruch 13, wobei die empfangene Benutzereingabe eine vorbestimmte Bewegung entlang eines spezifischen Teils des Berührungsbildschirms ist, die eine Bildschirmzuordnung ändert, sodass eine Größe des Teils des Bildschirms, der als erster Bildschirm angezeigt wird, verringert wird, wenn ein Teil des Berührungsbildschirms, der als zweiter Bildschirm angezeigt wird, entsprechend eines Abstands einer vorbestimmten Bewegung entlang des spezifischen Teils des Berührungsbildschirms vergrößert wird.

19. Endgerät nach einem der Ansprüche 13 bis 18, wobei der Inaktivitätszustand-Bildschirm (310a) einer von Folgenden ist: ein Bildschirm, der nichts anzeigt; und ein schwarzer Bildschirm.

## Revendications

1. Procédé de fourniture d'une interface pour un terminal (100) équipé d'un écran tactile (110), comprenant :
l'affichage d'un écran en état de veille (310a) lorsque le terminal est dans un état de veille ;
l'affichage d'un premier écran (310b), à la place de l'écran en état de veille, en réponse à la réception d'une entrée d'annulation de veille, le premier écran recouvrant initialement un second écran (310d) de sorte que le second écran ne soit pas initialement visible ; et
la réception d'une entrée utilisateur pour dévoiler au moins une partie du second écran sur l'écran tactile affichant le premier écran,
et **caractérisé en ce que** le procédé comprend en outre :
le dévoilement progressif du second écran de sorte que les informations sur le second écran puissent être visualisées en faisant passer une partie d'un écran affiché sur l'écran tactile du premier écran au second écran selon la progression de l'entrée utilisateur.

2. Procédé selon la revendication 1, dans lequel l'écran en état de veille (310a) est l'un de :
un écran n'affichant rien ; et un écran noir.

3. Procédé selon la revendication 1 ou 2, comprenant en outre, lorsque la progression de l'entrée utilisateur est suffisante, le dévoilement de la totalité du second écran (310d).

4. Procédé selon la revendication 3, dans lequel l'entrée utilisateur comprend un effleurement et glissement, et la progression de l'entrée utilisateur est suffisante lorsqu'un point tactile atteint une distance prédéfinie à partir d'un côté de l'écran tactile.

5. Procédé selon l'une quelconque des revendications 1 à 3, dans lequel l'entrée utilisateur comprend un effleurement et glissement.

6. Procédé selon la revendication 5, dans lequel ledit glissement est un glissement en direction de l'un d'un bord latéral, d'un bord supérieur et d'un bord inférieur de l'écran tactile (110).

7. Procédé selon l'une quelconque des revendications précédentes, dans lequel le second écran (310d) est un écran requis pour une fonction du terminal.

8. Procédé selon la revendication 1, ladite entrée utilisateur reçue étant un déplacement prédéterminé le long d'une partie spécifique de l'écran tactile (110) qui modifie l'attribution d'écran de sorte que la taille de la partie de l'écran affichée en tant que premier écran soit réduite alors qu'une partie de l'écran tactile affichée en tant que second écran est agrandie en correspondance avec la distance d'un déplacement prédéterminé le long de la partie spécifique de l'écran tactile.

9. Procédé selon la revendication 1, dans lequel le premier écran (310b) comprend un écran affichant une fermeture-éclair (320), et l'entrée utilisateur comprend une entrée tactile dans laquelle un mouvement prédéterminé tire une tirette (321) de la fermeture-éclair affichée sur le premier écran pour ouvrir la fermeture-éclair, le dévoilement progressif du second écran comprenant le passage d'une partie de l'écran lorsque la fermeture-éclair est ouverte du premier écran au second écran alors que la tirette de la fermeture-éclair est tirée.

10. Procédé selon la revendication 1, dans lequel le premier écran comprend un écran affichant plusieurs boutons (420a, 420b, 420c), et dans lequel l'entrée utilisateur comprend une entrée tactile qui effleure lesdits plusieurs boutons affichés sur le premier écran pour ouvrir lesdits plusieurs boutons, ledit dévoilement progressif du second écran comprenant le passage d'une partie de l'écran où les boutons sont ouverts du premier écran au second écran alors que lesdits plusieurs boutons sont ouverts.

11. Procédé selon la revendication 1, dans lequel le premier écran comprend un écran affichant un nœud (520), dans lequel l'entrée utilisateur comprend une entrée tactile qui tire une partie du nœud affiché sur le premier écran pour relâcher le nœud, ledit dévoilement progressif du second écran comprenant le passage d'une partie de l'écran affiché sur l'écran tactile du premier écran au second écran selon le rapport dans lequel le nœud est relâché.

12. Procédé selon la revendication 1, dans lequel le premier écran comprend un écran affichant une porte (620), dans lequel l'entrée utilisateur comprend une entrée tactile qui tire une poignée de la porte affichée sur le premier écran pour ouvrir la porte, ledit dévoilement progressif du second écran comprenant le passage d'une partie de l'écran où la porte est ouverte du premier écran au second écran alors que la poignée de la porte est tirée.

13. Terminal (100) pour fournir une interface, comprenant :
un écran tactile (110) comprenant un capteur tactile (120) qui est configuré pour recevoir une entrée d'annulation de veille pour afficher un premier écran, et une entrée utilisateur pour dévoiler au moins une partie d'un second écran recouvert par le premier écran, et une unité d'affichage (130) qui est configurée pour afficher un écran sous le contrôle d'un contrôleur ;
et le contrôleur (150) commandant l'unité d'affichage pour afficher un écran en état de veille (310a) lorsque le terminal est en état de veille et pour afficher le premier écran (310b) à la place de l'écran en état de veille lorsque le capteur tactile détecte l'entrée d'annulation de veille, le premier écran recouvrant initialement le second écran (310d) de sorte que le second écran ne soit initialement pas visible, et **caractérisé en ce que** le contrôleur est en outre agencé pour commander l'unité d'affichage pour dévoiler progressivement le second écran de sorte que les informations sur le second écran puissent être visualisées en faisant passer une partie d'un écran affiché sur l'unité d'affichage du premier écran au second écran selon la progression de l'entrée utilisateur détectée par le capteur tactile.

14. Terminal selon la revendication 13, ledit premier écran comprenant un écran affichant une fermeture-éclair, et ladite entrée utilisateur comprenant une commande d'entrée tactile qui tire une tirette de la fermeture-éclair affichée sur le premier écran pour ouvrir la fermeture-éclair, et ledit contrôleur commandant l'unité d'affichage pour faire passer une partie de l'écran où la fermeture-éclair est ouverte du premier écran au second écran alors que la tirette de la fermeture-éclair est tirée.

15. Terminal selon la revendication 13, ledit premier écran étant un écran affichant plusieurs boutons, ladite entrée utilisateur étant une entrée tactile qui effleure lesdits plusieurs boutons affichés sur le premier écran pour ouvrir lesdits plusieurs boutons, et ledit contrôleur commandant l'unité d'affichage pour faire passer une partie de l'écran où les boutons sont ouverts du premier écran au second écran alors que lesdits plusieurs boutons sont ouverts.

16. Terminal selon la revendication 13, ledit premier écran étant un écran affichant un nœud, ladite entrée utilisateur étant une entrée tactile qui tire une partie du nœud affiché sur le premier écran pour relâcher le nœud, et ledit contrôleur commandant l'unité d'affichage pour faire passer une partie de l'écran affiché sur l'écran tactile du premier écran au second écran selon le rapport dans lequel le nœud est relâché.

17. Terminal selon la revendication 13, ledit premier écran étant un écran affichant une porte, ladite entrée utilisateur étant une entrée tactile qui tire une poignée de la porte affichée sur le premier écran pour ouvrir la porte, et ledit contrôleur commandant l'unité d'affichage pour faire passer une partie de l'écran où la porte est ouverte du premier écran au second écran alors que la poignée de la porte est tirée.

18. Terminal selon la revendication 13, ladite entrée utilisateur reçue étant un déplacement prédéterminé le long d'une partie spécifique de l'écran tactile qui modifie l'attribution d'écran de sorte que la taille de la partie de l'écran affichée en tant que premier écran soit réduite alors qu'une partie de l'écran tactile affichée en tant que second écran est agrandie en correspondance avec la distance d'un déplacement prédéterminé le long de la partie spécifique de l'écran tactile.

19. Terminal selon l'une quelconque des revendications 13 à 18, ledit écran en état de veille (310a) étant l'un de : un écran n'affichant rien ; et un écran noir.
